# EUROPÄISCHE PATENTSCHRIFT

(11) **EP 0 827 466 B1**
(45) Veröffentlichungstag und Bekanntmachung des Hinweises auf die Patenterteilung: **30.12.1998**
(21) Anmeldenummer: 96909052.1
(22) Anmeldetag: 16.04.1996
(51) Int. Cl.: B60S 1/08

(54) **VORRICHTUNG ZUM BETREIBEN EINES SCHEIBENWISCHERS**
DEVICE FOR OPERATING A WINDSCREEN WIPER
DISPOSITIF POUR ACTIONNER UN ESSUIE-GLACE

(30) Priorität: 27.05.1995 DE 19519502
(43) Veröffentlichungstag der Anmeldung: 11.03.1998
(73) Patentinhaber: ROBERT BOSCH GMBH, 70442 Stuttgart (DE)
(72) Erfinder: PIENTKA, Rainer, D-77855 Achern (DE); BLITZKE, Henry, D-77815 Bühl (DE); BÜRKLE, Jörg, D-77654 Offenburg (DE)
(86) Internationale Anmeldenummer: DE9600658
(87) Internationale Veröffentlichungsnummer: WO9637387

(56) Entgegenhaltungen:
- EP-A- 0 547 337
- DE-A- 4 000 736
- DE-A- 4 231 763
- DE-A- 4 411 772

## Beschreibung

### Stand der Technik

Die Erfindung bezieht sich auf eine Vorrichtung zum Betreiben eines Scheibenwischers mit einer Sensoreinrichtung mit einer Sensoreinrichtung zum Erfassen des Benetzungszustandes einer Scheibe,mit einer das Sensorsignal aufnehmenden Auswerteeinrichtung, die eine Signalverarbeitungsstufe, einer Differenzauslösestufe und eine Steuersignalerzeugungsstufe aufweist, und mit einer Austeuereinheit für den Scheibenwischer, die von der Auswerteeinrichtung zum Erzeugen eines Wischbetriebs ansteuerbar ist.

Eine derartige Vorrichtung ist in der DE 33 14 770 A1 als bekannt ausgewiesen. Bei dieser bekannten Vorrichtung wird ein Wischbetrieb ausgelöst, wenn eine Differenz zwischen einem Referenzwert und einem aktuellen Meßwert des Sensorsignals einen vorgegebenen Schwellwert überschreitet. Eine solche Differenz baut sich zum Beispiel auf, wenn eine bestimmte Anzahl von Regentropfen die Signalstärke des Sensorsignals abnimmmt und unter den vorgegebenen Schwellwert sinkt. Bei einer derartigen Differenzauslöstung kommt es häufig vor, daß ein Wischbetrieb bei einzelnen auf die Scheibe fallenden Tropfen nicht eingeleitet wird, obwohl derartige Benetzungsereignisse der Scheibe störend wirken können.

### Vorteile der Erfindung

Der Erfindung liegt die Aufgabe zugrunde, eine Vorrichtung der eingangs genannten Art so weiterzubilde, daß der Wischbetrieb äußeren Bedingungen besser angepaßt und die Sicherheit erhöht wird.

Diese Aufgabe wird bei einer gattungsgemäßen Vorrichtung mit den Merkmalen des Patentanspruchs 1 gelöst.

Hiernach ist also vorgesehen, daß aktuelle Meßwerte des Sensorsignals neben der Differenzauslösestufe auch einer in der Auswerteeinrichtung vorgesehenen Tropfenerkennungseinrichtung zuführbar sind, in der das Sensorsignal anhand von Signaleinbrüchen hinsichtlich einzelner Tropfen bewertbar ist, daß bei Erkennen eines Mindestsignaleinbruchs über die Steuersignalerzeugungsstufe ein angepaßtes Steuersignal erzeugbar ist, mit dem über die Ansteuereinheit ein entsprechender Wischbetrieb auslösbar ist.

Durch die zusätzliche Tropfenerkennungseinrichtung werden auch solche Benetzungsereignisse der Scheibe erfaßbar, die auf einzelne, größere Tropfen zurückzuführen sind, und mittels des Scheibenwischers sind derartige störenden Benetzungszustände der Scheibe beseitigbar.

Vorteilhaft ist die Ausgestaltung der Vorrichtung derart, daß die Tropfenerkennungseinrichtung auch während Zeitdauern in Betrieb ist, in denen die Differenzauslösestufe inaktiv geschaltet ist. Ein Fall, in dem die Differenzauslösestufe inaktiv geschaltet ist, liegt zum Beispiel vor, wenn nach einem Wischvorgang die Scheibe nicht vollständig gereinigt ist und das Signal infolge von noch vorhandenen Feuchtigkeitsresten oder Schlieren infolge des relativ zügig ablaufenden Trockungsvorganges eine zunehmende Tendenz zeigt. Dabei soll im Normalfall kein Wischvorgang ausgelöst werden. Treffen in dieser Zeit auf die Scheibe Tropfen, so können diese mittels der Tropfenerkennungseinrichtung im Verlauf des Sensorsignals erkannt werden, da die Tropfen einen sichtbaren Signaleinbruch verursachen, und ein notwendiger Wischvorgang kann in dieser Situation unverzüglich ausgelöst werden.

Eine weitere vorteilhafte Ausbildung der Vorrichtung besteht darin, daß die Signaleinbrüche in der Tropfenerkennungseinrichtung durch Ermitteln der Differenz eines aktuellen Meßwerts gegenüber einer Bezugsgröße erfaßbar sind. Hierdurch werden vorhandene Signaleinbrüche festgestellt und die Tropfenerkennungseinrichtung kann für eine Analyse der Ursache des Signaleinbruchs aktiviert werden, um zwischen Benetzung und Störung zu unterscheiden.

Eine zuverlässige Bezugsgröße, die beispielsweise auch eine zunehmende Tendenz des Sensorsignals berücksichtigt und gegenüber momentanen Störungen unempfindlich ist, wird vorteilhaft dadurch gewonnen, daß die Bezugsgröße aus dem Mittelwert einer Anzahl der letzten Meßwerte vor dem aktuellen Meßwert gebildet ist. Beispielsweise können zur Bildung des Mittelwerts die letzten vier Meßwerte herangezogen werden.

Falls ein Signaleinbruch detektiert worden ist, kann eine zuverlässige Bewertung hinsichtlich des Vorliegens von Tropfen dadurch realisiert werden, daß die Tropfenerkennungseinrichtung eine Flächenberechnungsstufe aufweist, mit der dann, wenn die Differenz zwischen dem aktuellen Meßwert und der Bezugsgröße einen vorgegebenen Bezugswert überschreitet, die Fläche zwischen der Bezugsgröße und mehreren aufeinanderfolgenden aktuellen Meßwerten (MW) bestimmbar ist, und daß im Signaleinbruch als Tropfen bewertet wird, wenn die Fläche eine vorgegebene Mindestgröße überschreitet. Die Fläche bietet ein zuverlässiges Bewertungskriterium für das Vorliegen von Tropfen.

Ist vorgesehen, daß der vorgegebene Bezugswert für die Differenz und/oder die vorgegebene Mindestgröße der Fläche bei größeren Mittelwerten größer gewählt wird als bei kleineren Mittelwerten, so wird eine weitgehende Unempfindlichkeit der Tropfenerkennungseinrichtung vom Signalpegel erzielt.

Im Gegensatz zur Differenzauslösung, die zum Beispiel nicht aktiviert ist, wenn das Signal infolge abtrocknender Feuchtigkeitsreste auf der Scheibe eine zunehmende Tentenz zeigt, kann selbst in dieser Situation ein Wischbetrieb durch die Maßnahme ausgelöst werden, daß die Tropfenerkennungseinrichtung auch eingeschaltet ist, wenn das Sensorsignal bei abtrocknenden Feuchtigkeitsresten auf der Scheibe zunehmende Tendenz hat.

Die Erfindung wird nachfolgend anhand eines Ausführungsbeispiels unter Bezugnahme auf die Zeichnungen näher erläutert. Es zeigen:
- Fig. 1: eine Vorrichtung zum Betreibeb eines Scheibenwischers in schematischer Blockdarstellung,
- Fig. 2: einen Verlauf eines Sensorsignals über der Zeit und
- Fig. 3: eine nähere Ausgestaltung einer in Fig. 1 gezeigten Auswerteeinrichtung.

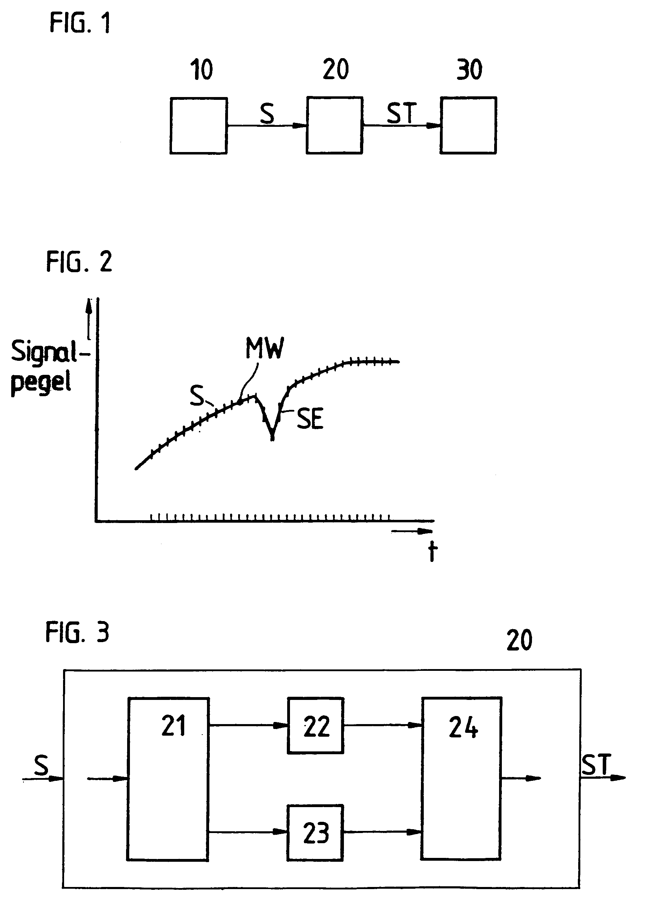

Die Figur 1 zeigt eine Vorrichtung zum Betreiben eines Scheibenwischers in Blockdarstellung mit einer Sensoreinrichtung 10, die ein Sensorsignal S an eine Auswerteeinrichtung 20 abgibt. Diese erzeugt ein Steuersignal ST, mit dem über eine Ansteuereinheit 30 ein Wischbetrieb durchführbar ist.

In Figur 2 ist ein Verlauf des Sensorsignals S über der Zeit t dargestellt. Das Sensorsignal S hat zunehmende Tendenz, wie sie zum Beispiel beim relativ zügigen Trocknen von Feuchtigkeitsresten bzw. Schlieren auf der Scheibe zu beobachten ist. Während eines solchen Abtrockungsvorgangs wird ein Wischbetrieb normalerweise unterbunden, und eine üblicherweise in der Auswerteeinrichtung 20 vorhandene Differenzauslösestufe 22 (siehe Figur 3) ist in dieser Zeit inaktiv geschaltet. Tritt in dieser Phase ein Benetzungsereignis auf, das einen Signaleinbruch SE verursacht, so wird also nicht unmittelbar ein Wischbetrieb ausgelöst, obwohl die auf die Scheibe fallenden Tropfen eine häufig nicht vernachlässigbare Sichtstörung hervorrufen. Auch wenn die Differenzauslösestufe aktiv ist, können durch einzelne, größere Tropfen Signaleinbrüche verursacht werden, die aber nicht ausreichen, um einen Schwellwert für eine Differenzauslösung zu überschreiten, so daß auch in diesem Fall nicht unverzüglich ein Wischbetrieb ausgelöst wird, obwohl die äußeren Ereignisse dies erfordern würden.

In Figur 3 ist ein nähere Ausgestaltung der Auswerteeinrichtung 20 schematisiert dargestellt, mit der einzelne, störende Tropfen oder Benetzungsereignisse während einer zunehmenden Tendenz des Sensorsignals S zuverlässig erkannt und ein Steuersignal ST für eine angemessenen Wischbetrieb erzeugt wird.

In einer Signalverarbeitungsstufe 21 werden Meßwerte MW des Sensorsignals S in relativ kurzen Zeitabständen, zum Beispiel alle 5 ms, gewonnen, die kurz genug sind, um Signaleinbrüche durch einzelne Tropfen erfassen zu können. Die Meßwerte können nurmalerweise sowohl der Differenzauslösestufe 22 als auch unabhängig davon einer Tropfenerkennungseinrichtung 23 zugeführt werden, die Benetzungsereignisse feststellen und entsprechende Informationen an eine Steuersignalerzeugungsstufe 24 liefern. In dieser wird bei Auftreten eines einen Wischvorgang erfordernden Benetzungsereignisse das Steuersignal ST erzeugt, das am Ausgang der Auswerteeinrichtung 20 an die Ansteuereinheit 30 zum Durchführen des Wischbetriebs weitergegeben wird.

Mittels der Tropfenerkennungseinrichtung 23 wird der aktuelle Meßwert mit dem Mittelwert einer Anzahl der letzten, zum Beispiel 4, Meßwerte verglichen. Eine Differenz zwischen dem aktuellen Meßwert MW und dem Mittelwert wird als Signaleinbruch erkannt, wobei der aktuelle Meßwert MW kleiner ist als der Mittelwert. Überschreitet diese Differenz einen vorgegebenen Bezugswert, wird der Mittelwert als Bezugsgröße gespeichert. In der Folge wird die Fläche zwischen der Bezugsgröße als gedachte horizontale Linie und einigen, zum Beispiel 3, der nachfolgenden aktuellen Meßwerten berechnet. Überschreitet diese Fläche eine vorgegebene Mindestgröße, wird der Signaleinbruch als Tropfen gewertet.

Der vorgegebene Bezugswert für die Differenz und die vorgegebene Mindestgröße für die Fläche werden vorzugsweise dem gerade vorliegenden Signalpegel der Meßwerte MW angepaßt, um zu erreichen, daß die Empfindlichkeit weitgehend unabhängig vom Signalpegel ist. Beispielsweise wird unterhalb eines bestimmten Inkrementwerts des Signalpegels der vorgegebene Bezugswert konstant auf zum Beispiel 4 Inkrement gesetzt. Oberhalb des inkrementalen Mittelwerts wird dieser durch eine bestimmte Zahl dividiert, und der Quotient wird als Differenz benutzt. Es werden zum Beispiel drei Messungen in Folge durchgeführt, und die Fläche muß mindestens ein vorgegebenes Vielfaches des berechneten Wertes sein. Dann wird der Signaleinbruch SE als Tropfen erkannt. Sodann gibt die Tropfenerkennungseinrichtung 23 eine entsprechende Information an die Steuersignalerzeugungsstufe 24, um ein Steuersignal ST für die Auslösung eines Wischbetriebs zu erzeugen.

Mit den beschriebenen Maßnahmen wird die Vorrichtung zum Betreiben eines Scheibenwischers so verbessert, daß stets ein angemessener Wischbetrieb bei auftreffenden Tropfen gewährleistet ist.

## Patentansprüche

1. Vorrichtung zum Betreiben eines Scheibenwischers mit einer Sensoreinrichtung zum Erfassen des Benetzungszustandes einer Scheibe,mit einer das Sensorsignal aufnehmenden Auswerteeinrichtung, die eine Signalverarbeitungsstufe, einer Differenzauslösestufe und eine Steuersignalerzeugungsstufe aufweist, und mit einer Austeuereinheit für den Scheibenwischer, die von der Auswerteeinrichtung zum Erzeugen eines Wischbetriebs ansteuerbar ist,
dadurch gekennzeichnet,
daß aktuelle Meßwerte des Sensorsignals (S) neben der Differenzauslösestufe (22) auch einer in der Auswerteeinrichtung (20) vorgesehenen Tropfenerkennungseinrichtung (23) zuführbar sind, in der das Sensorsignal (S) anhand von Signaleinbrüchen (SE) hinsichtlich einzelner Tropfen bewertbar ist,
daß bei Erkennen eines Mindestsignaleinbruchs über die Steuersignalerzeugungsstufe (24) ein angepaßtes Steuersignal (ST) erzeugbar ist, mit dem über die Ansteuereinheit (30) ein entsprechender Wischbetrieb auslösbar ist.

2. Vorrichtung nach Anspruch 1,
dadurch gekennzeichnet,
daß die Tropfenerkennungseinrichtung (23) auch während Zeitdauern in Betrieb ist, in denen die Differenzauslösestufe (22) inaktiv geschaltet ist.

3. Vorrichtung nach Anspruch 1 oder Anspruch 2,
dadurch gekennzeichnet,
daß die Signaleinbrüche (SE) in der Tropfenerkennungseinrichtung (23) durch Ermitteln der Differenz eines aktuellen Meßwerts (MW) gegenüber einer Bezugsgröße erfaßbar sind.

4. Vorrichtung nach Anspruch 3,
dadurch gekennzeichnet,
daß die Bezugsgröße aus dem Mittelwert einer Anzahl der letzten Meßwerte vor dem aktuellen Meßwert (MW) gebildet ist.

5. Vorrichtung nach Anspruch 3 oder Anspruch 4,
dadurch gekennzeichnet,
daß die Tropfenerkennungseinrichtung (23) eine Flächenberechnungsstufe aufweist, mit der dann, wenn die Differenz zwischen dem aktuellen Meßwert (MW) und der Bezugsgröße einen vorgegebenen Bezugswert überschreitet, die Fläche zwischen der Bezugsgröße und mehreren aufeinanderfolgenden aktuellen Meßwerten (MW) bestimmbar ist, und
daß im Signaleinbruch als Tropfen bewertet wird, wenn die Fläche eine vorgegebene Mindestgröße überschreitet.

6. Vorrichtung nach Anspruch 5,
dadurch gekennzeichnet,
daß der vorgegebene Bezugswert für die Differenz und/oder die vorgegebene Mindestgröße der Fläche bei größeren Mittelwerten größer gewählt wird als bei kleineren Mittelwerten.

7. Vorrichtung nach einem der vorhergehenden Ansprüche,
dadurch gekennzeichnet,
daß die Tropfenerkennungseinrichtung (23) auch eingeschaltet ist, wenn das Sensorsignal (S) bei abtrocknenden Feuchtigkeitsresten auf der Scheibe zunehmende Tendenz hat.

## Claims

1. Device for operating a windscreen wiper, with a sensor means for recording the state of wetting of a windscreen, with an evaluation means which receives the sensor signal and has a signal-processing stage, a difference trigger stage and a control-signal generating stage, and with an activation unit for the windscreen wiper, the said activation unit being capable of being activated by the evaluation means in order to generate a wiping operation, characterized in that current measured values of the sensor signal (S) can be fed not only to the difference trigger stage (22), but also to a drop detection means (23) which is provided in the evaluation means (20), in which the sensor signal (S) can be assessed in terms of individual drops by means of signal breakdowns (SE), and in that, when a minimum signal breakdown is detected, an adapted control signal (ST) can be generated via the control-signal generating stage (24), a corresponding wiping operation being capable of being triggered by means of the said adapted control signal via the activation unit (30).

2. Device according to Claim 1, characterized in that the drop detection means (23) is in operation even during periods of time in which the difference trigger stage (22) is switched to inactive.

3. Device according to Claim 1 or Claim 2, characterized in that the signal breakdowns (SE) can be recorded in the drop detection means (23) by determining the difference between a current measured value (MW) and a reference variable.

4. Device according to Claim 3, characterized in that the reference variable is formed from the average value of a number of the last measured values prior to the current measured value (MW).

5. Device according to Claim 3 or Claim 4, characterized in that the drop detection means (23) has an area calculation stage, by means of which, when the difference between the current measured value (MW) and the reference variable exceeds a predetermined reference value, the area between the reference variable and a plurality of successive current measured values (MW) can be determined, and in that the signal breakdown is assessed as drops when the area exceeds a predetermined minimum size.

6. Device according to Claim 5, characterized in that the predetermined reference value for the difference and/or for the predetermined minimum size of the area is selected to be higher in the case of higher average values than in the case of lower average values.

7. Device according to one of the preceding claims, characterized in that the drop detection means (23) is switched on even when the sensor signal (S) has a rising trend when moisture residues on the windscreen are drying off.

## Revendications

1. Dispositif pour actionner un essuie-glace, comprenant :
- un dispositif de détection de l'état d'humidification d'une vitre,
- un dispositif d'évaluation recevant le signal du détecteur et comportant un étage d'exploitation du signal, un étage de déclenchement par différence et un étage de génération d'un signal de commande,
- une unité de commande de l'essuie-glace qui peut être commandée par le dispositif d'évaluation pour faire fonctionner l'essuie-glace,
caractérisé en ce que les valeurs actuelles mesurées du signal (S) du détecteur peuvent être adressées non seulement à l'étage de déclenchement par différence (22) mais aussi à un dispositif de reconnaissance des gouttes (23) prévu dans le dispositif d'évaluation (20) et qui évalue le signal (S) du détecteur au moyen des ruptures du signal (SE) concernant des gouttes individuelles,
- lorsqu'une rupture minimale du signal est détectée, l'étage de génération de signal de commande (24) peut émettre un signal de commande adapté (ST) permettant à l'unité de commande (30) de déclencher un essuyage correspondant.

2. Dispositif selon la revendication 1,
caractérisé en ce que
le dispositif de reconnaissance des gouttes (23) est en service également pendant les périodes où l'étage de déclenchement par différence (22) est inactive.

3. Dispositif selon la revendication 1 ou 2,
caractérisé en ce que
les ruptures du signal (SE) peuvent être détectées dans le dispositif de reconnaissance des gouttes (23) par établissement de la différence entre autres valeur actuelle mesurée (MW) et une grandeur de référence.

4. Dispositif selon la revendication 2,
caractérisé en ce que
la grandeur de référence est la valeur moyenne d'un certain nombre de valeurs mesurées, procédant directement la valeur moyenne actuelle (MW).

5. Dispositif selon la revendication 3 ou 4,
caractérisé en ce que
le dispositif de reconnaissance des gouttes (23) comporte un étage de calcul de surface qui, lorsque la différence entre la valeur actuelle mesurée (MW) et la grandeur de référence dépasse une certaine valeur, peut déterminer la surface entre la grandeur de référence et plusieurs valeurs mesurées actuelles (MW) successives, et que la rupture du signal est valorisée en tant que goutte lorsque la surface dépasse une grandeur minimale donnée.

6. Dispositif selon la revendication 5,
caractérisé en ce que
la valeur de référence donnée pour la différence et/ou la grandeur minimale donnée pour le champ est choisie plus grande quand les valeurs moyennes sont assez élevées que quand elles sont assez petites.

7. Dispositif selon une des revendications précédentes,
caractérisé en ce que
le dispositif de reconnaissance des gouttes (23) est également enclenché quand le signal de détection (S) a une tendance croissante en présence de résidus humides en train de sécher sur la vitre.
